# EUROPÄISCHE PATENTANMELDUNG

(11) **EP 4 797 170 A1**
(43) Veröffentlichungstag der Anmeldung: **26.08.2026**
(21) Anmeldenummer: 25159923.9
(22) Anmeldetag: 25.02.2025
(51) Int. Cl.: G06Q 10/047, G06Q 10/0832, G06Q 10/0835, G06Q 50/40

(54) **COMPUTERIMPLENTIERTES VERFAHREN ZUM ERZEUGEN EINES DATENSATZES FÜR EINEN GROSSRAUM- UND/ODER SCHWERTRANSPORT**

(71) Anmelder: Sommer, Helga, 48477 Hörstel-Dreierwalde (DE)
(72) Erfinder: Sommer, Helga, 48477 Hörstel-Dreierwalde (DE)
(74) Vertreter: Jeon, Jin

(57) **Zusammenfassung**

Ein computerimplementiertes Verfahren zum Erzeugen eines Datensatzes für einen Großraum- und/oder Schwertransport, umfasst ein Bereitstellen einer Route als ein erster Datensatz mit einer ersten Datenstruktur, die zur kartographischen Darstellung in einer digitalen Karte eingerichtet ist, wobei der erste Datensatz eine Vielzahl von vorbestimmten Stellen enthält, die die Route definieren, ein Bereitstellen mehrerer Statusvorgaben als ein zweiter Datensatz mit einer zweiten Datenstruktur, die eingerichtet ist, ein Dokument mit einer Zeichenfolge zu belegen, wobei der zweite Datensatz mehrere Stellen und diesen mehreren Stellen zugeordnete Statusvorgaben umfasst, und ein Bilden eines dritten Datensatzes in einer dritten Datenstruktur, wobei der dritte Datensatz die die Route definierenden Vielzahl von vorbestimmten Stellen und mehreren der Vielzahl von vorbestimmten Stellen zugeordneten Statusvorgaben umfasst.

## Beschreibung

### TECHNISCHER HINTERGRUND

Die vorliegende Erfindung betrifft das technische Gebiet der Großraum- und/oder Schwertransporte. Insbesondere betrifft die vorliegende Erfindung die Aspekte der Planung und Durchführung eines Schwertransportes unter Verwendung eines computerimplementierten Verfahrens.

Bei einem Schwertransport werden Verkehrsbauwerke genutzt, die für den gewöhnlichen Güter- und Personentransport ausgelegt sind, in der Regel aber nicht für Schwertransporte. Insbesondere Verkehrsbauwerke wie beispielsweise Straßen, Brücken, Tunnel, Unterführungen, Zufahrten, Kreuzungen, Straßen mit Verkehrsinseln, Kreisverkehr und dergleichen sind in der Regel für den herkömmlichen Straßenverkehr ausgelegt.

Daher gilt es für Schwertransporte, zusätzliche Anforderungen zu erfüllen, die über die Vorschriften für den gewöhnlichen Güter- und Personentransport hinausgehen. Deshalb wird jeder Schwertransport einzeln geplant, genehmigt und durchgeführt.

Vom herkömmlichen Straßenverkehr unterscheiden sich Großraum- und Schwertransporte (GST) durch Schwertransportdaten, die gesetzliche oder sonstige vorgeschriebene Zulassungsbedingungen für die Teilnahme am herkömmlichen Straßenverkehr nicht erfüllen. In der Bundesrepublik Deutschland sind diese Zulassungsbedingungen durch die Straßenverkehrs- und Zulassungsverordnung (StVZO) geregelt, insbesondere durch § 32 betreffend Abmessungen und § 34 betreffend Gewicht und Einzelachslast. Das Transportfahrzeug im Sinne der vorliegenden Offenbarung kann den Großraumtransport, den Schwertransport, den Großraum- und Schwertransport und/oder den Langtransport gemäß den Bestimmungen der StVZO oder der Straßenverkehrsordnung (StVO) betreffen. Sofern nicht anders angegeben, wird der Begriff Transport in der vorliegenden Offenbarung zusammenfassend für den Großraumtransport, den Schwertransport, den Großraum- und Schwertransport und den Langtransport verwendet. Mit "Transportfahrzeug" kann im Allgemeinen ein Schwertransportfahrzeug bezeichnet sein. Die Schwertransportdaten, insbesondere betreffend die Höhe, die Breite, die Länge, das Gesamtgewicht oder die Einzelachslast, können sich auf das Transportfahrzeug, auf das Transportgut oder auf die Kombination von beiden beziehen.

Bislang wird die Routenplanungen für Gefahren- und Schwertransporte überwiegend analog durchgeführt. Die Daten der Routenplanung und die übrigen Daten für die Antragsstellung werden in menschlich lesbarer Form in Textform, beispielsweise im PDF Format ausgegeben. Sodann werden Sie in ein behördliches Verwaltungssystem wiederum manuell eingegeben und manuell geprüft. Rückmeldungen, wie Nachfragen, Bewilligungen oder Ablehnungen werden in menschlich lesbarer Textform von der Behörde an den Antragssteller zurück übermittelt.

Sowohl für die computerimplementierte Routenplanung als auch für die Navigation entlang einer geplanten Route mithilfe einer computerimplementierten Navigationsassistenz sind digitale Datensätze erforderlich. Die in menschlich lesbarer Textform von der Behörde an den Antragssteller zurück übermittelten Daten sind mit den Datenstrukturen einer computerimplementierte Routenplanung oder einer computerimplementierten Navigationsassistenz inkompatibel. Damit die digitalen Datensätze für computerimplementierte Navigationsassistenzen geeignet sind, müssen die den von der Behörde zurück übermittelten Daten überarbeitet und mit den technischen Anforderungen von Navigationsassistenzen in Einklang gebracht zu werden.

Dieser Prozess der Anpassung digitaler Datensätze an in Textform bereitgestellte Rückmeldungen, Bewilligungen, etc., ist zeitaufwändig und fehleranfällig und kann zu kostenintensiven Verzögerungen führen.

Vor diesem Hintergrundstellt sich die technische Aufgabe, die Prozesse betreffend den Schwertransport hinsichtlich des Arbeits-, und Zeitaufwands sowie hinsichtlich der Genauigkeit und Effizienz zu verbessern.

### KURZZUSAMMENFASSUNG DER ERFINDUNG

Die technische Aufgabe wird durch den Gegenstand des Anspruchs 1 sowie durch den Gegenstand der nebengeordneten Ansprüche gelöst. Besonders vorteilhafte Ausführungsformen sind durch die abhängigen Ansprüche gegeben. Erfindungsgemäß ist ein Verfahren zum Erzeugen eines Datensatzes für einen Schwertransport vorgesehen. Das Verfahren umfasst das Bereitstellen einer Route als ein erster Datensatz mit einer ersten Datenstruktur. Die erste Datenstruktur ist vorzugsweise zur kartographischen Darstellung in einer digitalen Karte eingerichtet. Der erste Datensatz enthält eine Vielzahl von vorbestimmten Stellen, die die Route definieren.

Ferner umfasst das Verfahren das Bereitstellen mehrerer Statusvorgaben als ein zweiter Datensatz mit einer zweiten Datenstruktur. Die zweite Datenstruktur ist vorzugsweise dazu eingerichtet, ein vorzugsweise elektronisches Dokument mit einer Zeichenfolge zu belegen. Der zweite Datensatz umfasst mehrere Stellen und Statusvorgaben, die diesen mehreren Stellen zugeordnet sind.

Das Verfahren umfasst schließlich das Bilden eines dritten Datensatzes in einer dritten Datenstruktur. Die dritte Datenstruktur kann insbesondere zur kartographischen Darstellung in einer digitalen Karte eingerichtet sein. Zusätzlich oder alternativ kann die dritte Datenstruktur zur Darstellung in einem computerimplementierten Navigationsassistenz eingerichtet sein. Der dritte Datensatz umfasst die die Route definierende Vielzahl von vorbestimmten Stellen. Der dritte Datensatz umfasst zusätzlich mehrere Statusvorgaben, die der Vielzahl von vorbestimmten Stellen zugeordnet sind.

Der erste Datensatz kann mit einer ersten Datenstruktur gespeichert werden, die zur kartographischen Darstellung in der digitalen Karte eingerichtet ist. Mit anderen Worten ist der erste Datensatz vorzugsweise für die kartographische Darstellung des Routenvorschlags in der digitalen Karte optimiert. Die erste Datenstruktur kann beispielsweise gemäß des jeweils verwendeten Kartendienstes eingerichtet sein. Die erste Datenstruktur kann insbesondere für eine Kombination mit Geodaten, einschließlich Geobasisdaten und gegebenenfalls Geofachdaten, eingerichtet sein. Der erste Datensatz und die erste Datenstruktur sind somit kompatibel mit einer digitalen Karte eingerichtet.

Eine vorbestimmte Stelle der Route kann einen geographischen oder topographischen Ort kennzeichnen, oder eine Gruppe von zwei oder mehr geographischen oder topographischen Orten (Streckenabschnitt). Die Route kann einen Startpunkt und/oder einen Zielpunkt aufweisen. Vorzugsweise umfasst die Strecke sowohl einen Startpunkt als auch einen Zielpunkt. Der Startpunkt und/oder der Zielpunkt können jeweils eine vorbestimmte Stelle realisieren. Der Startpunkt kann einen geographischen oder topographischen Ort kennzeichnen, an dem das Transportfahrzeug seine Fahrt entlang der Strecke beginnt. Der Zielpunkt kann einen geographischen oder topographischen Ort kennzeichnen, an dem die Fahrt des Transportfahrzeugs endet.

Die Route kann als Sequenz von zwei, drei oder mehr vorbestimmten Stellen definiert sein. Insbesondere kann die Route als vorbestimmten Abfolge der zwei, drei oder mehr vorbestimmten Stellen definiert sein. Die vorbestimmte Abfolge kann insbesondere mit dem Startpunkt beginnen, mit dem Zielpunkt enden und insbesondere eine vorbestimmte sukzessive Sequenz mehrerer anderer vorbestimmter Stellen umfassen.

Eine Zeichenfolge wie hierin verwendet kann ein einzelnes Zeichen oder eine endliche Folge von mehreren Zeichen umfassen. Ein Zeichen kann insbesondere ein alphanumerisches Zeichen sein. Ferner kann das Zeichen ein Zeichen einer beliebigen Fremdsprache sein. Die Zeichenfolge kann dem englischen Fachbegriff "String" entsprechen. Die Zeichenfolge kann insbesondere eingerichtet sein, in einem elektronischen Dokument als solches dargestellt zu werden. Beispiele für ein elektronisches Dokument umfassen grundsätzlich jedes elektronische Dokument in einer geeigneten Maschinensprache, Seitenbeschreibungssprache oder Auszeichnungssprache, insbesondere ein XML-Dokument, ein HTML-Dokument und ein PDF-Dokument.

Die zweite Datenstruktur wird vorzugsweise in einer Seitenbeschreibungssprache (Page Description Language, PDL) bereitgestellt. Die zweite Datenstruktur kann in einem Format vorliegen, das zur Darstellung von Informationen für einen menschlichen Benutzer mittels einer Computereinrichtung vorgesehen ist, wobei die zweite Datenstruktur vorzugsweise den exakten Aufbau einer Seite definiert, etwa für ein spezielles Ausgabegerät, wie einen Drucker. Beispiele für die Seitenbeschreibungssprache (PDL) umfasse insbesondere PostScript und PDF. Vorzugsweise wird der zweite Datensatz als ein PDF-Dokument bereitgestellt.

Insbesondere kann die dritte Datenstruktur in einer Auszeichnungssprache (Markup Language, ML) bereitgestellt werden. Die dritte Datenstruktur kann in einem Format vorliegen, das sowohl zur lesbaren Darstellung für einem lesbaren menschlichen Benutzer eingerichtet ist, als auch von einer Computereinrichtung lesbar ist. Beispiele für die Auszeichnungssprache umfassen insbesondere Procedural Markup Language (PML), wie z.B. TeX, PDF, PostScript und PCL, und insbesondere Descriptive Markup Language (DML), wie z.B. SGML, XML, HTML, DocBook, TEI, MathML, WML oder SVG. Bevorzugt entspricht die zweite Datenstruktur dem Format PDF oder PDF/A.

In dem zweiten Datensatz und/oder dem dritten Datensatz können verschiedene Stellen definiert sein, denen jeweils eine Statusvorgabe zugeordnet ist. Es kann bevorzugt sein, dass die mehreren Stellen mit zugeordneten Statusvorgaben zu einer Teilgruppe oder allen der Vielzahl von vorbestimmten Stellen des dritten Datensatzes korrespondieren. Dieselbe Statusvorgabe kann in dem zweiten Datensatz mehreren unterschiedlichen Stellen zugeordnet sein. Jeder der mehreren vorbestimmten Stellen kann eine oder mehrere Statusvorgaben zugeordnet sein.

Der zweite Datensatz kann eine Vielzahl von Statusvorgaben unterschiedlicher Statuskategorien umfassen. Insbesondere können einer jeweiligen vorbestimmten Stelle zwei oder mehr Statusvorgaben unterschiedlicher Statuskategorien zugeordnet sein. Die unterschiedlichen Statuskategorien können insbesondere einander ergänzende Statusvorgaben betreffen. Beispielsweise kann eine erste Statuskategorie ein Transportfahrzeug, ein Begleitfahrzeug oder eine Kombination aus Transportfahrzeug und Begleitfahrzeug (Verband) betreffen. Eine zweite Statuskategorie kann das Ausgeben eines Signals, wie ein Verkehrszeichen, betreffen. Eine dritte Statuskategorie kann eine Manövervorgabe betreffen. Eine vierte Statuskategorie kann einen Abstand des Transportfahrzeug zu wenigstens einem anderen Fahrzeug, wie einem anderen Verkehrsteilnehmer oder einem Begleitfahrzeug, betreffen.

Insbesondere können die Statusvorgaben wenigstens eine vorbestimmte Handlungsvorgabe umfassen, die einer vorbestimmten Stelle zugeordnet ist, oder mehrere vorbestimmte Handlungsvorgaben, die verschiedenen vorbestimmten Stellen zugeordnet sind. Die Statusvorgaben können eine Vielzahl von Handlungsvorgaben umfassen, die jeweils einer oder mehreren Stellen zugeordnet sind. Eine vorbestimmte Handlungsvorgabe kann beispielsweise durch einen zweiten Benutzer als insbesondere behördliche Auflage bestimmt werden. Eine Handlungsvorgabe kann beispielsweise bestimmen, dass an der jeweiligen zugeordneten vorbestimmten Stelle, wie einem Brückenbauwerk, einem Tunnel, einem Mündungsbereich, einem Kreisverkehr oder einer Kreuzung, etc., dem Schwertransport und/oder wenigstens einem Begleitfahrzeug des Schwertransports vorgegeben wird, wo dieses bestimmte Transport- oder Begleitfahrzeug (gegebenenfalls eines von mehreren Fahrzeugen mit unterschiedlichen Rollen) zu positionieren ist. Alternativ oder zusätzlich kann eine Handlungsvorgabe beispielsweise bestimmen, dass an der jeweiligen zugeordneten vorbestimmten Stelle eine visuelle und/oder akustische Meldung angezeigt wird. Eine Handlungsvorgabe, die auf das Ausgeben eines Signals, insbesondere mit dem Transportfahrzeug und/oder wenigstens einem Begleitfahrzeug, bezogen ist, kann gemäß einem Verkehrszeichenplan eingerichtet sein.

Der mit dem erfindungsgemäßen computerimplementierten Verfahren erzeugte dritte Datensatz kann, beispielsweise vom Antragssteller oder einem Logistikunternehmen, in der computerimplementierte Routenplanung oder computerimplementierten Navigationsassistenz eingesetzt werden. Im dritten Datensatz findet sich die vollständige Route in Kombination mit den Statusvorgaben, die relevanten Stellen entlang der Route zugeordnet sind. Mittels des computerimplementierten Verfahrens können Statusvorgaben wie behördliche Auflagen aus einem Genehmigungsbescheid effizient und rasch mit den entsprechenden geographischen oder topographischen Orten einer Route zusammengeführt werden. Ferner lassen sich mit dem computerimplementierten Verfahren Anwenderfehler beim Konsolidieren einer Route aus einem ersten Datensatz und Statusvorgaben aus einem zweiten Datensatz vermeiden. Ein besonderer Vorteil besteht darin, dass der dritte Datensatz nicht bloß als Grundlage für eine computerimplementierten Navigationsassistenz nutzbar ist, sondern beispielsweise für eine Erfahrungsdatenbank zur computerimplementierte Routenplanung anderer Routen verwendet werden kann.

Es kann bevorzugt sein, dass das Bilden des dritten Datensatzes umfasst, das redundante Daten des ersten Datensatzes und/oder des dem zweiten Datensatzes entfernt werden. Alternativ kann das Bereitstellen des ersten Datensatzes umfassen, das redundante Daten des ersten Datensatzes entfernt werden. Alternativ oder zusätzlich kann das Bereitstellen des zweiten Datensatzes umfassen, das redundante Daten des zweiten Datensatzes entfernt werden. Vorzugsweise werden die Statusvorgaben des zweiten Datensatzes beim Bilden des dritten Datensatzes konsolidiert. Das Bereitstellen des zweiten Datensatzes oder das Bilden des dritten Datensatzes kann umfassen, dass der zweite Datensatz auf Dopplungen oder mehrfache Wiederholungen von bestimmten Stellen zugeordneten Statusangaben überprüft wird, und um diese bereinigt wird. Ein Bereinigen des ersten Datensatzes und/oder zweiten Datensatzes kann vorzugsweise als ein anfänglicher oder der initiale Teilschritt des Bildens des dritten Datensatzes erfolgen. Alternativ ist es denkbar, dass das Bereinigen des ersten Datensatzes und/oder des zweiten Datensatzes im Zuge des jeweiligen Bereitstellens erfolgt. Vorzugsweise werden redundante Statusvorgaben des zweiten Datensatzes vor dem oder bei dem Bilden des dritten Datensatzes entfernt. Der zweite Datensatz kann der mehrere unterschiedliche Zuständigkeitsgebiete betreffen und/oder mehrere Autoren haben und infolgedessen die gleichen Statusvorgaben oder dergleichen mehrfach enthalten kann. Im Vergleich zum zweiten Datensatz soll der dritte Datensatz weniger, vorzugsweise keine, redundanten Statusvorgaben enthalten.

Vorzugsweise umfassen der erste Datensatz, der zweite Datensatz und/oder der dritte Datensatz mit dem Schwertransport assoziierte Transportdaten. Besonders bevorzugt umfassen sowohl der zweite Datensatz als auch der dritte Datensatz mit dem Schwertransport assoziierte Transportdaten. Der erste Datensatz kann mit dem Schwertransport assoziierte Transportdaten umfassen. Alternativ oder zusätzlich kann die Route des ersten Datensatzes unter Maßgabe der mit dem Schwertransport assoziierten Transportdaten erzeugt worden sein, bevor der erste Datensatz für das computerimplementiertes Verfahren bereitgestellt wurde. Weiter alternativ oder zusätzlich können die mehreren Stellen und die ihnen zugeordneten Statusvorgaben des zweiten Datensatzes unter Maßgabe der mit dem Schwertransport assoziierten Transportdaten erzeugt worden sein, bevor der zweite Datensatz für das computerimplementierte Verfahren bereitgestellt wurde.

Die Transportdaten (auch: Schwertransportdaten) enthalten vorzugsweise mindestens eines von einer Länge, einer Höhe, einer Breite, einer Gesamtmasse, einer Achslast (oder einzelnen Achslasten bei einer ungleichmäßigen Achslastverteilung) und einem Kurvenverhalten des Schwertransports, insbesondere bezogen auf die Gesamtheit eines Transportfahrzeugs und dessen Transportgut. Das Kurvenverhalten kann einen statischen Wendekreis und/oder einen dynamischen Parameter gemäß einer Schleppkurvenanalyse enthalten. Diese Schwertransportdaten umfassen wenigstens eines von Folgendem: ein Gesamtgewicht, das 18 Tonnen übersteigt, eine Einzelachslast, die 8 Tonnen oder 10 Tonnen übersteigt, eine Breite, die 2,55 Meter übersteigt, eine Höhe, die 4 Meter übersteigt; und eine Länge, die 15,5 Meter übersteigt. Die Schwertransportdaten können insbesondere diejenige oder diejenigen der vorgenannten Kennzahlen bezeichnen, die über den jeweils zulässigen Wert gemäß den Gesetzen und Verordnungen der jeweiligen Jurisdiktion (wie z.B. gemäß StVZO, StVO und StVG in der Bundesrepublik Deutschland) übersteigen.

Die Schwertransportdaten können vorzugsweise auf einen bestimmten Schwertransportbezogen sein. Der Schwertransport kann als Gefahrengut- und/oder Schwertransport bezeichnet sein. Die Schwertransportdaten können insbesondere ein Gesamtgewicht des Schwertransports definieren, welches 18 Tonnen, insbesondere 19,5 Tonnen, 20 Tonnen, 25 Tonnen, 28 Tonnen, 32 Tonnen, 35 Tonnen, 40 Tonnen, oder 44 Tonnen, übersteigt. Das Gesamtgewicht des Schwertransports kann bis zu 50 Tonnen, insbesondere bis zu 100 Tonnen, bis zu 500 Tonnen, bis zu 1000 Tonnen, bis zu 2500 Tonnen oder bis zu 5000 Tonnen, betragen.

Die Schwertransportdaten können alternativ oder zusätzlich eine Einzelachslast des Schwertransports definieren, welche 8 Tonnen oder 10 Tonnen, insbesondere 11,5 Tonnen, 16 Tonnen, 18 Tonnen, oder 20 Tonnen übersteigt. Die Einzelachslast des Schwertransports kann bis zu 20 Tonnen, insbesondere bis zu 50 Tonnen, bis zu 100 Tonnen oder bis zu 1000 Tonnen betragen.

Die Schwertransportdaten können alternativ oder zusätzlich eine Breite des Schwertransports sowie gegebenenfalls von dessen Transportgut definieren, welche 2,55 Meter übersteigt. Die Breite des Schwertransports kann mindestens 2,6 Meter, insbesondere mindestens 3 Meter, mindestens 3,5 Meter, mindestens 4 Meter oder mindestens 5 Meter, betragen. Die Breite des Schwertransports kann bis zu 4 Meter, insbesondere bis zu 5 Meter, bis zu 7 Meter, bis zu 10 Meter, bis zu 20 Meter, bis zu 50 Meter oder bis zu 100 Meter, betragen.

Die Schwertransportdaten können alternativ oder zusätzlich eine Höhe des Schwertransports definieren, welche 4 Meter übersteigt. Insbesondere kann die Höhe des Transportfahrzeugs 4,5 Meter, 5 Meter, 7 Meter, 10 Meter, 20 Meter oder 50 Meter übersteigen. Insbesondere kann die Höhe des Transportfahrzeugs bis zu 10 Meter, bis zu 20 Meter, bis zu 50 Meter, bis zu 100 Meter, bis zu 200 Meter oder bis zu 500 Meter betragen.

Die Schwertransportdaten können alternativ oder zusätzlich eine Länge des Schwertransports definieren, welche 15,5 Meter übersteigt. Insbesondere kann die Länge des Schwertransports 16,5 Meter, 18 Meter, 20 Meter, 25 Meter, 30 Meter, 40 Meter, 50 Meter, 100 Meter oder 200 Meter übersteigen. Insbesondere kann die Länge des Schwertransports bis zu 200 Meter, bis zu 300 Meter, bis zu 400 Meter, bis zu 500 Meter oder bis zu 1000 Meter betragen. Es ist zu beachten, dass für die Maße, die Gesamtmasse und die Achslast keine pauschalen Obergrenzen zu setzen sind, da diese durch die einzelnen Anforderungen des individuellen Transportvorhabens bestimmt werden.

Eine bevorzugte Ausführung des computerimplementierten Verfahrens umfasst ferner ein Bereitstellen einer Vorgabendatenbank, die eine Vielzahl von Statusvorgaben umfasst, und ein Analysieren des zweiten Datensatzes. Vorzugsweise umfasst die Vorlagedatenbank eine Vielzahl normierter Statusvorgaben (Vorgabenkatalog). Das Analysieren des zweiten Datensatzes erfolgt, um wenigstens eine der in dem zweiten Datensatz enthaltenen Statusvorgaben entsprechend zu einer der Vielzahl von Statusvorgaben der Vorgabedatenbank zu bestimmen. Das Analysieren des zweiten Datensatzes zum Bestimmen von (normierten) Statusvorgaben einer Vorgabedatenbank entsprechend zu den im zweiten Datensatz enthaltenen Statusvorgaben wird vorzugsweise zu dem Zweck durchgeführt, den dritten Datensatz mit den (normierten) Statusvorgaben der Vorgabedatenbank zu bilden. Vorzugsweise wird durch das Analysieren des zweiten Datensatzes wenigstens eine darin enthaltene Statusvorgabe entsprechend zu einer der Vielzahl von Statusvorgaben der Vorgabedatenbank bestimmt. Bevorzugt werden mittels der Analyse mehrere, vorzugsweise alle, in dem zweiten Datensatz enthaltenen Statusvorgaben entsprechend zu Statusvorgaben der Vorgabedatenbank bestimmt. Anders gesagt ist da Analysieren derart eingerichtet, dass anhand des Vorgabenkatalogs, der eine vordefinierte Menge bestimmter Statusvorgaben enthält, erkannt wird, welche Statusvorgaben, gegebenenfalls in nicht normkonformer Konnotation, in dem zweiten Datensatz enthalten sind.

Dabei kann die Statusvorgabe (kurz: Vorgabe) eine einzelne Instruktion oder eine Zusammenstellung von mehreren Instruktionen bezeichnen, die ein Transportfahrzeug eines Schwertransports betrifft. Gegebenenfalls bezeichnen die Statusvorgaben eine Zusammenstellung von mehreren Instruktionen für einen Verband, der ein Transportfahrzeug und wenigstens ein Begleitfahrzeug umfasst. Insbesondere kann eine Datenbank bereitgestellt sein oder werden, die einen Satz von vordefinierten Statusvorgaben enthält. Aus diesem Satz von vordefinierten Vorgaben kann eine Vorgabe ausgewählt werden. Optional kann eine Vorgabe aus einem Satz von vorbestimmten Statusvorgaben ausgewählt und mit der oder den (entsprechenden) Stelle(n) verknüpft werden.

Gemäß einer Weiterbildung des computerimplementierten Verfahrens umfasst das Analysieren des zweiten Datensatzes ein Erkennen von wenigstens einem Schlagwort, das mit einer der Vielzahl von Statusvorgaben der Vorgabedatenbank verknüpft ist. Alternativ oder zusätzlich umfasst das Analysieren des zweiten Datensatzes eine semantische Analyse. In dem zweiten Datensatz sind die mehreren Statusvorgaben und Stellen vorzugsweise als Zeichenfolge enthalten. Das Analysieren umfasst insbesondere, dass eine Textanalyseroutine auf den zweiten Datensatz angewendet wird, die dazu eingerichtet ist, in dem zweiten Datensatz Zeichenfolgen zu erkennen, die einer der Vielzahl von Statusvorgaben entsprechen, welche in der Vorgabedatenbank hinterlegt sind, erkennt. Dank der Textanalyseroutine kann aus dem zweiten Datensatz extrahiert werden, welche normierte Statusvorgaben den im zweiten Datensatz benannten Stellen zugeordnet sind. Die Textanalyseroutine kann den zweiten Datensatz beispielsweise mittels einer deterministischen Logik (beispielsweise einer Schlagwortanalyse), einer Fuzzy-Logik und/oder semantisch auf die normierten Statusvorgaben des Vorgabenkatalogs überprüfen. Auf diese Weise können auch abweichend von einer normierten Konnotation, beispielsweise als Freitext, formatierte Statusvorgaben berücksichtigt werden.

Bei einer Weiterbildung des computerimplementierten Verfahrens umfasst das Analysieren des zweiten Datensatzes, dass eine Anordnung der wenigstens einen Statusvorgabe in dem zweiten Datensatzes mittels wenigstens einen Analysekriteriums identifiziert (lokalisiert) wird. Die Anordnung der Vielzahl von Statusvorgaben in dem zweiten Datensatz ist vorzugweise gemäß der zweiten Datenstruktur vorbestimmt. Indem das Analysieren des zweiten Datensatzes in Bezug auf die Statusvorgaben hinsichtlich eines Analysekriteriums erfolgt, welches die Anordnung der Statusvorgaben in dem zweiten Datensatz gemäß der zweiten Datenstruktur berücksichtigt, kann das Analysieren besonders effizient und fehlerresistent erfolgen.

Das Analysieren des zweiten Datensatzes kann insbesondere beinhalten, dass gemäß eines ersten Analysekriteriums nur eine vorbestimmte Sektion oder nur eine vorbestimmte Untergruppe der Sektionen in dem zweiten Datensatz identifiziert wird bzw. werden, und eine weitergehende Analyse des zweiten Datensatzes hinsichtlich der Statusvorgaben auf diese Sektion oder Sektionen beschränkt wird. Die zweite Datenstruktur kann dahingehend definiert sein, dass der zweite Datensatz in mehrere Sektionen untergliedert ist (beispielsweise umfassend oder bestehend aus einem Bescheid, einer erste Anlage betreffend Allgemeine Bedingungen und Auflagen, einer zweite Anlage betreffend einen Auflagenkatalog für Großraum- und/oder Schwerverkehr, und einer dritte Anlage betreffend eine tabellarische Darstellung von Fahrauflagen).

Das Analysieren des zweiten Datensatzes kann alternativ oder zusätzlich beinhalten, dass gemäß eines zweiten Analysekriteriums nur zwei vorbestimmte Bereiche in dem zweiten Datensatz, insbesondere innerhalb einer vorbestimmten Sektion des zweiten Datensatzes, identifiziert wird bzw. werden, und eine weitergehende Analyse des zweiten Datensatzes hinsichtlich der Stellen und der Statusvorgaben auf diese Bereiche beschränkt wird. Das Analysieren des zweiten Datensatzes kann umfassen, das gemäß der zweiten Datenstruktur gruppierte Stellen und Statusvorgaben als einander zugeordnet identifiziert werden. Optional kann die zweite Datenstruktur dahingehend definiert sein, dass die Stellen und die diesen Stellen zugordnete Statusvorgaben gruppiert sind, beispielsweise in einer jeweiligen Zeile oder einer jeweiligen Spalte, insbesondere einer jeweiligen Tabellenzeile oder jeweiligen Tabellenspalte. Insbesondere kann die zweite Datenstruktur dergestalt definiert sein, dass die Stellen und die Statusvorgaben als Array und/oder tabellarisch angeordnet sind. Vorzugsweise kann die zweite Datenstruktur dergestalt sein, dass, insbesondere innerhalb einer vorbestimmten Sektion, die Stellen in einem ersten vorbestimmten Bereich angeordnet sind und die Statusvorgaben in einem zweiten vorbestimmten Bereich angeordnet sind. Beispielsweise kann in der zweiten Datenstruktur eine oder mehrere erste Spalten einen Bereich bilden, in dem die Stellen angeordnet sind. Zusätzlich oder alternativ kann in der zweiten Datenstruktur beispielsweise eine oder mehrere andere Spalten einen Bereich bilden, in der die Statusvorgaben angeordnet sind.

Gemäß einer Weiterbildung des computerimplementierten Verfahrens wird eine Warnmeldung ausgegeben, wenn an einer dem wenigstens einen Analysekriterium entsprechenden Anordnung in dem zweiten Datensatzes keine Entsprechung zu einer der Vielzahl von Statusvorgaben der Vorgabedatenbank ermittelbar ist. Falls beispielsweise ein Analysekriterium hinsichtlich der zweiten Datenstruktur definiert ist, welches beim Analysieren zu einer Zeichenfolge führt, der beispielsweise mittels der Textanalyseroutine keine Zustandsvorgabe eindeutig zugeordnet werden kann, kann die Warnmitteilung ausgegeben werden. Auf diese Weise kann sichergestellt werden, dass Informationen in nicht normkonformer Konnotation, gemäß einer weitergehenden Analyse oder manuell geprüft werden können. Alternativ kann die Warnmeldung eine Rückmeldung an die Quelle des zweiten Datensatzes zu Korrekturzwecken veranlassen. Auf diese Weise kann eine besonders hohe Genauigkeit des Verfahrens gewährleistet werden.

Gemäß einer bevorzugten Ausführung des computerimplementierten Verfahrens, die mit den obigen Ausführungen und Weiterbildungen kombinierbar ist, wird eine Schnittmenge der Vielzahl vorbestimmter Stellen des ersten Datensatzes und der Stellen des zweiten Datensatzes gebildet, wobei jede Stelle des zweiten Datensatzes wenigstens einer vorbestimmten Stelle des ersten Datensatzes zugeordnet wird. Insbesondere umfasst das Bilden des dritten Datensatzes das Bilden der Schnittmenge. Die Schnittmenge der vorbestimmten Stellen des ersten Datensatzes und der im zweiten Datensatz enthaltenen Stellen besteht vorzugsweise aus den Stellen, an denen der Schwertransport spezielle Auflagen insbesondere gemäß eines Bescheids zu erfüllen hat. Es ist denkbar, dass der zweite Datensatz nicht alle vorbestimmten Stellen des ersten Datensatzes umfasst (d.h. der zweite Datensatz betrifft nur einen oder manche Teilstrecken der Route). Ferner ist es denkbar, dass mehrere Stellen des zweiten Datensatzes derselben vorbestimmten Stelle des ersten Datensatzes zugeordnet werden. Beispielsweise kann der zweite Datensatz mehrere Gruppen aus Stellen und diesen Stellen zugeordneten Statusvorgaben aufweisen, die zumindest teilweise mit derselben oder denselben vorbestimmten Stellen des ersten Datensatzes korrespondieren. Beispielsweise kann der zweite Datensatz eine erste Gruppe umfassen, die sich auf einen Streckenabschnitt entlang einer Autobahn und eine dazugehörige Statusvorgabe bezieht, und eine zweite Gruppe, die sich auf ein Brückenbauwerk inmitten dieses Streckenabschnitts und eine diesem Brückenbauwerk zugeordnete weitere Statusvorgabe bezieht.

Bei einer Weiterbildung des computerimplementierten Verfahrens werden die den Stellen zugeordneten Statusvorgaben gemäß der Abfolge der diesen Stellen zugeordneten vorbestimmten Stellen entlang der Route sortiert. Wenn die Route als Sequenz von mehreren vorbestimmten Stellen definiert ist, kann die Schnittmenge dieser vorbestimmten Stellen und der entsprechenden Stellen des zweiten Satzes in der Abfolge dieser Sequenz sortiert werden. Durch die Sortierung der Stellen, denen gemäß dem zweiten Datensatz Statusvorgaben zugeordnet sind, in der Abfolge der entsprechenden vorbestimmten Stellen des ersten Datensatzes, können die Statusvorgaben in eine insbesondere chronologische Reihenfolge bezüglich des Verkehrens des Schwertransports zwischen einem Startpunkt und einem Endpunkt gebracht werden. Das Sortieren der den Stellen zugeordneten Statusvorgaben kann beispielsweise mittels einer Parser-Routine erfolgen, die die Stellen der Route sukzessive vom Startpunkt zum Zielpunkt durchläuft und dabei die den durchlaufenen vorbestimmten Stellen zugeordneten Statusvorgaben in entsprechender sukzessiver Reihenfolge anordnet, insbesondere zum Bilden des dritten Datensatzes.

Nach einer bevorzugten Ausführung des computerimplementierten Verfahrens wird der dritte Datensatz mit einer dritten Datenstruktur bereitgestellt, die zur kartographischen Darstellung in einer digitalen Karte eingerichtet ist. Das computerimplementierte Verfahren zum Erzeugen eines Datensatzes für einen Schwertransport kann insbesondere umfassen, dass der dritte Datensatz in einer dritten Datenstruktur zum Bereitstellen einer digitalen Karte bereitgestellt wird, wobei die digitale Karte ferner die Statusvorgaben zumindest teilweise abbildet. In der digitalen Karte können beispielsweise der Startpunkt, Zielpunkt, weitere Stellen (insbesondere Streckenabschnitte) Karte sowie die der jeweiligen Stelle zugeordneten Statusvorgabe(n) grafisch dargestellt werden. Ein kartographisches Darstellen oder eine kartographische Darstellung wie hierin verwendet bezieht sich auf einen Vorgang oder dessen Ergebnis, Informationen geographisch referenziert in einer digitalen Karte darzustellen. Insbesondere werden dabei Verkehrsbauwerke, einschließlich Straßen, in der digitalen Karte geographisch referenziert dargestellt. Die digitale Karte kann basierend von Geobasisdaten und Geofachdaten generiert werden und/oder von einem Kartendienst erhalten werden. Beispielsweise kann die digitale Karte, und/oder die interaktive digitale Karte, durch das kommerziell erhältliche Produkt der Serie AGNES (eingetragene Marke) der Sommer Gruppe bereitgestellt sein. Alternativ kann die digitale Karte durch das System VEMAGS (eingetragene Marke) bereitgestellt sein. Die dritten Daten, die in der dritten Datenstruktur bereitgestellt werden, die zur kartographischen Darstellung in einer digitalen Karte eingerichtet sind, können beispielsweise für eine Erfahrungsdatenbank bereitgestellt werden, mit deren Hilfe eine Routenplanung erfolgen kann.

Alternativ oder zusätzlich wird der dritte Datensatz mit einer dritten Datenstruktur oder einer weiteren Datenstruktur bereitgestellt, die eingerichtet ist, ein elektronisches Dokument mit einer Zeichenfolge zu belegen. Die dritten Daten, die in der dritten Datenstruktur bereitgestellt werden, die eingerichtet ist, ein elektronisches Dokument mit einer Zeichenfolge zu belegen, können beispielsweise für eine Erfahrungsdatenbank bereitgestellt werden, mit deren Hilfe eine Routenplanung erfolgen kann. Alternativ kann der dritte Datensatz mit einer dritten Datenstruktur oder vierten Datenstruktur bereitgestellt werden, die eingerichtet ist, ein elektronisches Dokument mit einer Zeichenfolge zu belegen, beispielsweise um daraus ein analoges Roadbook anzufertigen, das bei dem Großraum- und/oder Schwertransport mitgeführt werden kann.

Weiter alternativ oder zusätzlich kann der dritte Datensatz mit einer dritten Datenstruktur bereitgestellt werden, die dazu eingerichtet ist, ein elektronisches Dokument (Ausgabedokument) mit einer Zeichenfolge zu belegen, wobei das mit einer dritten Datenstruktur bereitgestellte Dokument kleiner ist als das mit der zweiten Datenstruktur bereitgestellte Eingangsdokument. Insbesondere kann der dritte Datensatz in der dritten Datenstruktur für das Ausgabedokument die Transportdaten, die die Route definierenden Vielzahl von vorbestimmten Stellen und mehrere der Vielzahl von vorbestimmten Stellen zugeordneten Statusvorgaben umfassen. Das Ausgabedokument kann gemäß einer dritten oder weiteren Datenstruktur dergestalt definiert sein, dass der dritte Datensatz in mehrere Sektionen untergliedert ist. Insbesondere kann das Ausgabedokument gemäß der dritten oder weiteren Datenstruktur dahingehend definiert sein, dass es eine Sektion betreffend die Transportdaten, eine Sektion mit Informationen zu einem Bescheid betreffend die Route, eine Anlage betreffend einen Auflagenkatalog für Großraum- und/oder Schwerverkehr einschließlich allgemeiner Bedingungen und Auflagen, und/oder eine weitere Anlage betreffend eine tabellarische Darstellung von Fahrauflagen umfasst, wobei insbesondere die Anlage und/oder die weitere Anlage mehrere Statusvorgaben in einer der Abfolge enthält, die entsprechend der Abfolge der diesen Stellen zugeordneten vorbestimmten Stellen entlang der Route angeordnet ist.

Weiter alternativ oder zusätzlich wird der dritte Datensatz mit einer dritten Datenstruktur oder in einer anderen Datenstruktur bereitgestellt, die zur Darstellung mit einer computerimplementierten Navigationsassistenz eingerichtet ist. Beispielsweise kann der dritte Datensatz mit der dritten Datenstruktur für eine computerimplementierten Navigationsassistenz bereitgestellt werden, die für eine audiovisuelle Wiedergabe des Fahrwegs entlang der Route insbesondere inklusive Auflagen gemäß RGST (Richtlinien zum Antrags- und Genehmigungsverfahren für die Durchführung von Großraum- und Schwertransporten, insbesondere gemäß der Fassung aus dem Jahr 2013 oder gemäß der im Jahr 2024 vom Bundeskabinett beschlossenen Fassung) als ersetzende Maßnahme für einen menschlichen Beifahrer ausgelegt und eingerichtet ist. Der dritte Datensatz mit der dritten Datenstruktur kann beispielsweise zur Verwendung mit der die Software ERNA (eingetragene Marke) der Sommer Group bereitgestellt werden. Vorzugsweise kann der dritte Datensatz gebildet und in dem in DE 10 2022 130 587 A1 beschriebenen Verfahren zum Betätigen wenigstens einer Ausgabeeinheit verwendet werden. Vorzugsweise kann der dritte Datensatz gebildet und in dem in DE 10 2024 105 604 A1 beschriebenen Verfahren zur Planung und/der Ausführung eines Schwertransports verwendet werden, wobei deren gesamte Offenbarung hier durch Bezugnahme vollständig mit aufgenommen ist.

Der dritte Datensatz, der in einer dritten Datenstruktur bereitgestellt wird, die zur Darstellung mit einer computerimplementierten Navigationsassistenz eingerichtet ist, kann beispielsweise verwendet werden in dem Meldesystem für wenigstens ein Begleitfahrzeug gemäß DE 10 2022 130 587 A1, deren gesamte Offenbarung hier durch Bezugnahme vollständig mit aufgenommen ist. Eine digitale Karte kann eine digitale, verkleinerte Darstellung eines geographischen oder topographischen Gebietes abbilden. Vorzugsweise werden die Statusvorgaben eingebettet in der digitalen, verkleinerte Darstellung eines geographischen oder topographischen Gebietes dargestellt. Das in der Karte dargestellte Gebiet kann vordefiniert sein. Beispielsweise kann die Karte das Gebiet der Bundesrepublik Deutschland, von Europa, oder ein beliebiges anderes Gebiet der Welt darstellen. Die Karte kann beispielsweise Straßen, Wege, Bahnlinien, Verläufe von Gewässern, Höhenprofile, politische oder sonstige Gebietsgrenzen beinhalten. Beispielsweise kann die Karte zwischen unterschiedlichen Straßentypen grafisch differenzieren. Beispielsweise Straßentypen umfassen Autobahnen, autobahnähnliche Straßen, Fernverkehrsstraßen, Straßen, Autostraßen, Europa-, Bundes-, Land-, Staats-, Kreis-, Gemeinde- und Ortsstraßen, Ortsdurchfahrt, Feld- und Waldwege, Fahrradwege, Fußwege und/oder Fußgängerzonen. Des Weiteren können die Straßen nach Straßenkategorien, nach Straßenbaulastträger oder nach gesetzlichen Regelungen eingeteilt sein.

Die Karte wird als eine digitale Karte bereitgestellt. Die Karte kann eine Rasterkarte oder eine Vektorkarte sein. Die Karte kann insbesondere als online-Karte in einem virtuellen Datenraum von einem und/oder über ein Netzwerk, von einem Server, von einem Cloudspeicher oder sonstigen Einrichtungen abgerufen werden. Die Karte kann als eine einzige Karte bereitgestellt werden und/oder aus mehreren Karten oder Kartenabschnitten zusammengesetzt werden.

Die Erfindung betrifft auch ein Verfahren zum Durchführen eines Schwertransports unter Verwendung eines dritten Datensatzes, der mit dem computerimplementierten Verfahren nach einem der vorstehenden Ansprüche generiert wurde.

Die Erfindung betrifft auch ein Verfahren zum Durchführen eines Großraum- und/oder Schwertransports (Transportverfahren). Das Verfahren zum Durchführen eines Großraum- und/oder Schwertransports erfolgt vorzugsweise unter Verwendung eines dritten Datensatzes, der mit dem oben beschriebenen Verfahren erzeugt wurde. Insbesondere kann das Verfahren zum Durchführen eines Großraum- und/oder Schwertransports das oben beschriebene Verfahren zum Erzeugen eines (dritten) Datensatzes für einen Großraum- und/oder Schwertransport (Erzeugungsverfahren) umfassen.

Gemäß dem erfindungsgemäßen Verfahren zum Durchführen eines Großraum- und/oder Schwertransports verkehrt ein Schwertransportfahrzeug entlang der Strecke gemäß dem ersten und/oder dem dritten Datensatze. Bevorzugt verkehrt ein Schwertransportfahrzeug, welches zumindest streckenabschnittsweise von einem oder mehreren Begleitfahrzeugen begleitet werden kann, auf der Strecke entsprechend dem dritten Datensatz. Das Bereitstellen des dritten Datensatzes, der die Stellen umfasst, welche die Strecke definieren, entlang welcher der Transport durchgeführt wird, erfolgt vorzugsweise, bevor das Transportfahrzeug, insbesondere in einem Fahrzeugverband mit einem oder mehreren Begleitfahrzeugen, entlang dieser vorbestimmten Strecke verkehrt.

Um die Sicherheit für Schwertransporte und andere Verkehrsteilnehmer zu erhöhen, können Transportfahrzeuge beim Durchführen des Transportverfahrens von einem oder mehreren Begleitfahrzeugen begleitet werden. Mithilfe eines Begleitfahrzeugs oder mehrerer Begleitfahrzeuge erfolgt ein besonderes Kenntlichmachen des Schwertransports. Das Schwertransportfahrzeug und dessen Begleitfahrzeug oder Begleitfahrzeuge bilden einen Fahrzeugverband. Das wenigstens ein Begleitfahrzeug kann zur Wahrnehmung hilfspolizeilicher Aufgaben eingesetzt werden. Beispielsweise können mit einem Begleitfahrzeug Verkehrszeichen für andere, insbesondere nachfolgende und/oder entgegenkommende, Verkehrsteilnehmer angezeigt werden, vorzugsweise entsprechend der Statusvorgaben des dritten Datensatzes. Zusätzlich oder alternativ kann ein Begleitfahrzeug dazu eingesetzt werden, einen Zufahrtsweg zu der vorbestimmten Strecke, auf welcher sich der Schwertransport bewegt, zeitweise zu versperren, vorzugsweise entsprechend der Statusvorgaben des dritten Datensatzes. Bei dem Verfahren kann der dritte Datensatz als Statusvorgabe enthalten, dass das Transportfahrzeug zumindest streckenabschnittsweise in einem Fahrzeugverband verkehrt. Dabei kann der dritte Datensatz bestimmen, dass Verband wenigstens ein Begleitfahrzeug zum Absichern des Transportfahrzeugs oder bestimmter Stellen entlang der Route und/oder zum Warnen von anderen Verkehrsteilnehmern umfasst. Zu diesem Zweck kann der dritte Datensatz eine oder mehrere Handlungsvorgaben umfassen, die das Verkehren in einem Fahrzeugverband bestimmen. Zusätzlich oder alternativ können die Handlungsvorgaben die Anzahl von Begleitfahrzeugen und/oder vorbestimmte Positionen und/oder vorbestimmte, insbesondere akustische und/oder visuelle, Anzeigeinhalte für die Begleitfahrzeuge definieren.

Das hierin offenbarte computerimplementierte Verfahren ermöglicht, die Prozesse betreffend insbesondere die Einrichtung, Steuerung, Prüfung und Durchführung eines Schwertransports automatisch und einheitlich durchzuführen. Auf diese Weise werden die Prozesse betreffend den Schwertransport vereinfacht. Dadurch können Arbeits-, Zeit- und Kostenaufwand für den Schwertransport gesenkt werden. Insbesondere können die Stellung eines Antrags auf die Genehmigung des Schwertransports sowie eine Prüfung durch Prüfeinrichtungen wesentlich erleichtert werden, wobei die Verkehrsinfrastruktur vor Schäden oder übermäßige Belastung geschützt wird.

Das computerimplementierte Verfahren kann als eine Zusammenstellung von Anweisungen (Instruktionen) bereitgestellt sein, die durch mehrere Computereinrichtungen in einem verteilten System ausführbar sind. Die Computereinrichtung wie hierin verwendet kann eine Vorrichtung mit einer Datenverarbeitungskapazität sein, die zur Ausführung des hierin offenbarten computerimplementierten Verfahrens geeignet ist. Mit anderen Worten ist die Computereinrichtung mit einer Rechenleistung (oder Prozessorleistung) ausgestattet, die ausreichend für die Ausführung des computerimplementierten Verfahrens ist. Die Computereinrichtungen kann insbesondere ein PC, ein mobiles Endgerät und/oder eine mobile Computereinrichtung wie ein Tablet umfassen.

Das verteilte System wie hierin verwendet bezeichnet ein verteiltes System gemäß den Lehren der Informatik. Demnach kann ein verteiltes System einen Zusammenschluss unabhängiger Computereinrichtungen bezeichnen, sodass die unabhängigen Computereinrichtungen ein einziges System für einen Benutzer oder mehrere darstellen. Alternativ oder zusätzlich kann ein verteiltes System eine Menge interagierender Prozesse oder Prozessoren sein, die über keinen gemeinsamen Speicher verfügen und über Nachrichten miteinander kommunizieren. Ferner kann das verteilte System hierin gemäß den Lehren aus den Gebieten des verteilten Rechnens oder der verteilten Verarbeitung (Distributed Computing) verstanden und verwendet werden.

Die Computereinrichtung oder die mehreren Computereinrichtungen des verteilten Systems können mit einem elektronischen Speicher ausgestattet sein, der zum Zwischen- oder dauerhaften Speichern des computerimplementierten Verfahrens als Ganzes geeignet ist, und/oder zum Zwischen- oder dauerhaften Speichern von Daten zur Ausführung des computerimplementierten Verfahrens geeignet ist.

Das Bereitstellen des ersten Datensatzes kann umfassen, dass der erste oder zweite Datensatz unter Berücksichtigung von Einschränkungsdaten bezüglich wenigstens einer vorbestimmten Stelle gebildet wird, an welcher ein Verkehrsbauwerk angeordnet ist. Zum Bilden des ersten Datensatzes kann insbesondere verifiziert werden, dass ein Verkehrsbauwerk oder dessen Einschränkungsdaten dergestalt sind, dass sie für den Schwertransport hinsichtlich der Maße, der Gesamtmasse, der Achslast(en) und des Kurvenverhaltens für das Befahren (oder für die Durchfahrt) geeignet sind und/oder eine Kollisionsgefahr für den Schwertransport unter Maßgabe wenigstens einer Statusvorgabe oder mehrerer Statusvorgaben ausgeschlossen werden. Der erste Datensatz kann eine Route repräsentieren, mit der nur solche Verkehrsbauwerke assoziiert sind (d.h. eine Teilmenge von Verkehrsbauwerken aller denkbaren Routen), die zulässig für die Durchfahrt oder eingeschränkt zulässig für den gegebenen Schwertransport sind. Insbesondere kann zum Bilden des ersten Datensatzes das computerimplementierte Verfahren für einen Schwertransport gemäß DE 10 2021 108 452 A1 verwendet werden, deren gesamte Offenbarung hier durch Bezugnahme vollständig mit aufgenommen ist.

Verkehrsbauwerke können im Allgemeinen für die Abwicklung von gewöhnlichem Transport konstruiert sein und somit für manche Schwertransporte nur eingeschränkt geeignet oder ungeeignet sein. Die Einschränkungsdaten, die zugehörig zu einem jeweiligen Verkehrsbauwerken sind, enthalten Informationen über (mögliche) Einschränkungen für das Befahren und für die Durchfahrt der einzelnen Verkehrsbauwerke. Die Einschränkungsdaten können eine maximale Durchfahrtshöhe, eine maximale Durchfahrtsbreite, ein maximal zulässiger Wendekreis (Kurvenradius), ein maximal zulässiges Gesamtgewicht, eine maximal zulässige Achslast und/oder sonstige physische Einschränkung für die Durchfahrt oder das Befahren mit einem gegebenen Schwertransport enthalten. Beispielsweise reduziert sich die Anzahl der passierbaren Verkehrsbauwerke ab, je länger, je breiter, je höher und/oder je schwerer ein Schwertransport ist. Damit verkleinert sich die Teilmenge an Verkehrsbauwerke, die mit einem gegebenen Schwertransport verkleinern, je größer und/oder je schwerer der Schwertransport ist, in Relation zur Gesamtmenge an Verkehrsbauwerken.

### KURZBESCHREIBUNG DER ZEICHNUNGEN

Die Erfindung wird anhand von einzelnen Ausführungsbeispielen in Verbindung mit den beiliegenden Zeichnungen ausführlich beschrieben.
- Fig. 1: zeigt eine schematische Darstellung einer Ausführung des Verfahrens zum Erzeugen eines Datensatzes für einen Großraum- und/oder Schwertransport.
- Fig. 2: zeigt eine schematische Darstellung anderen Ausführung des Verfahrens zum Erzeugen eines Datensatzes für einen Großraum- und/oder Schwertransport.
- Fig. 3: zeigt eine schematische Darstellung einer weiteren Ausführung des Verfahrens zum Erzeugen eines Datensatzes für einen Großraum- und/oder Schwertransport.

### AUSFÜHRLICHE BESCHREIBUNG

In der nachfolgenden Beschreibung bevorzugter Ausführungen anhand der Figuren werden für dieselben oder ähnliche Elemente verschiedener Ausführungsformen dieselben oder ähnliche Bezugszeichen verwendet, um die Lesbarkeit zu vereinfachen.

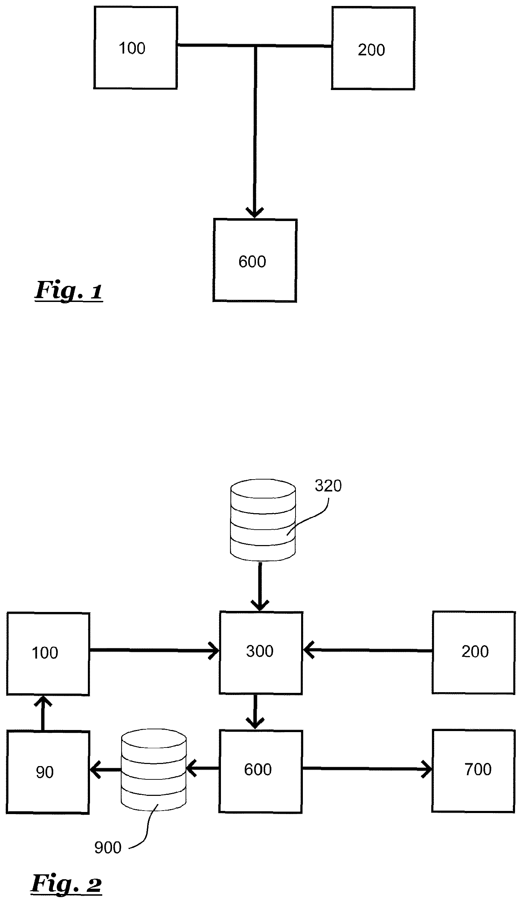

Fig. 1 zeigt ein eine schematische Darstellung eines computerimplementierten Verfahrens zum Erzeugen eines Datensatzes für einen Großraum- und/oder Schwertransport. Das Verfahren umfasst das Bereitstellen 100 eines ersten Datensatzes. Mit dem ersten Datensatz wird eine Route bereitgestellt, entlang der der Großraum- und/oder Schwertransport verkehren soll. Die Route enthält eine Vielzahl von vorbestimmten Stellen, die die Route definieren. Der erste Datensatz wird in einer ersten Datenstruktur bereitgestellt, die zur kartographischen Darstellung in einer digitalen Karte eingerichtet ist, beispielsweise für eine Routenplanungssoftware. Beispielsweise kann der erste Datensatz eine Datenstruktur aufweisen, die zur Darstellung in einer digitalen Karte durch das kommerziell erhältlichen Produkt der Serie AGNES (eingetragene Marke) der Sommer Gruppe bereitgestellt werden.

Das Verfahren umfasst ferner das Bereitstellen 200 eines zweiten Datensatzes. Als der zweite Datensatz werden Statusvorgaben bereitgestellt. Die Statusvorgaben sind mehreren Stellen zugeordnet. Der zweite Datensatz wird in einer zweiten Datenstruktur bereitgestellt, die eingerichtet ist, ein (elektronisches) Dokument mit einer Zeichenfolge zu belegen. Beispielsweise kann die zweite Datenstruktur kann in einem Format bereitgestellt werden, das zur Darstellung von Informationen für einen menschlichen Benutzer mittels einer Computereinrichtung vorgesehen ist. Insbesondere kann die zweite Datenstruktur den Aufbau einer Seite definieren, insbesondere mittels einer Seitenbeschreibungssprache, vorzugsweise gemäß dem PDF Format.

Schließlich umfasst das Verfahren das Bilden 600 eines dritten Datensatzes. Der dritte Datensatz umfasst die die Route definierenden Vielzahl von vorbestimmten Stellen und Statusvorgaben, die mehreren der Vielzahl von vorbestimmten Stellen zugeordnet sind. Es ist dieser dritte Datensatz, welcher in dem Verfahren für einen für einen Großraum- und/oder Schwertransport erzeugt wird. Der erste Datensatz, der zweite Datensatz und der dritte Datensatz mit dem Schwertransport assoziierte Transportdaten.

Fig. 2 zeigt ein andere eine schematische Darstellung eines computerimplementierten Verfahrens zum Erzeugen eines Datensatzes für einen Großraum- und/oder Schwertransport. Das Verfahren umfasst das Bereitstellen 100 eines ersten Datensatzes. Mit dem ersten Datensatz wird eine Route bereitgestellt, entlang der der Großraum- und/oder Schwertransport verkehren soll. Die Route enthält eine Vielzahl von vorbestimmten Stellen, die die Route definieren. Das Verfahren umfasst ferner das Bereitstellen 200 eines zweiten Datensatzes. Mit dem zweiten Datensatz werden Statusvorgaben bereitgestellt. Die Statusvorgaben sind mehreren Stellen zugeordnet. Schließlich umfasst das Verfahren das Bilden 600 eines dritten Datensatzes. Der dritte Datensatz umfasst die die Route definierende Vielzahl von vorbestimmten Stellen und die Statusvorgaben, die den mehreren Stellen zugeordnet sind.

Das Verfahren umfasst auch das Bereitstellen einer Vorgabendatenbank 320, die eine Vielzahl von Statusvorgaben in einer normierten Konnotation enthält. In dem zweiten Datensatz können die Statusvorgaben als Freitext formatiert enthalten sein, als nicht zwingend bzw. im Allgemeinen nicht in der normierten Konnotation. Die Statusvorgaben können in dem zweiten Datensatz teilweise, aber nicht vollständig in einer normierten Konnotation enthalten sein. Das Verfahren umfasst das Analysieren 300 des zweiten Datensatzes, um wenigstens eine der in dem zweiten Datensatz enthaltenen Statusvorgaben entsprechend zu einer der Vielzahl von Statusvorgaben der Vorgabedatenbank zu bestimmen. Das Analysieren 300 des zweiten Datensatzes 120 kann zum Beispiel ein Erkennen von wenigstens einem Schlagwort, das mit einer der Vielzahl von Statusvorgaben der Vorgabedatenbank verknüpft ist, umfassen. Zusätzlich oder alternativ kann das Analysieren 300 eine semantische Analyse des zweiten Datensatzes 120 oder Auszügen aus davon umfassen.

Das in Fig. 2 dargestellte Verfahren kann das zuvor in Bezug auf Fig. 1 erläuterten Verfahren teilweise oder vollständig mitumfassen. Zur Vermeidung von Wiederholungen wird auf die obigen Erläuterungen verwiesen

Das Analysieren 300 des zweiten Datensatzes kann umfassen, dass eine Anordnung der wenigstens einen Statusvorgabe 21, 22, 23 in dem zweiten Datensatzes mittels wenigstens eines Analysekriteriums identifiziert wird.

Das Analysieren 300 des zweiten Datensatzes kann insbesondere beinhalten, dass gemäß eines ersten Analysekriteriums nur eine vorbestimmte Sektion oder nur eine vorbestimmte Untergruppe der Sektionen in dem zweiten Datensatz identifiziert wird bzw. werden, und eine weitergehende Analyse des zweiten Datensatzes hinsichtlich der Statusvorgaben auf diese Sektion oder Sektionen beschränkt wird. Die zweite Datenstruktur kann dahingehend definiert sein, dass der zweite Datensatz in mehrere Sektionen untergliedert ist (beispielsweise einen Bescheid, eine erste Anlage betreffend Allgemeine Bedingungen und Auflagen, eine zweite Anlage betreffend einen Auflagenkatalog für Großraum- und/oder Schwerverkehr, und eine dritte Anlage betreffend eine tabellarische Darstellung von Fahrauflagen). Die zweite Datenstruktur kann insbesondere dahingehend definiert sein, dass die Stellen und die diesen Stellen zugordnete Statusvorgaben gruppiert sind, beispielsweise in einer jeweiligen Tabellenzeile. Ein weitergehendes Analysieren 300 des zweiten Datensatzes hinsichtlich der Stellen und der Statusvorgaben kann auf diese vorbestimmte diese Bereiche beschränkt werden.

Das Analysieren 300 des zweiten Datensatzes kann zum Beispiel umfassen, das gemäß der zweiten Datenstruktur gruppierte Stellen und Statusvorgaben als einander zugeordnet identifiziert werden. Vorzugsweise kann die zweite Datenstruktur dergestalt sein, dass innerhalb einer vorbestimmten Sektion die Stellen in einem ersten vorbestimmten Bereich und die Statusvorgaben in einem zweiten vorbestimmten Bereich angeordnet sind.

Dabei kann infolge des Analysierens 300 eine Warnmeldung ausgegeben werden, wenn zwar gemäß einem Analysekriterium eine Statusvorgabe an einer gewissen Anordnung erwartet wird, an dieser erwartungsgemäßen Anordnung jedoch keine Statusvorgabe erkannt oder zumindest nicht eindeutig erkannt wird. Es kann insbesondere eine Warnmeldung ausgegeben werden, wenn an einer dem wenigstens einen Analysekriterium entsprechenden Anordnung in dem zweiten Datensatzes keine Entsprechung zu einer der Vielzahl von Statusvorgaben der Vorgabedatenbank ermittelbar ist. Die Warnmeldung kann beispielsweise bewirken, dass eine manuelle Benutzereingabe angefordert wird.

Zum Bilden 600 des dritten Datensatzes kann es vorgesehen sein, dass die Statusvorgaben nur in einer vorbestimmten, insbesondere normierten, Konnotation gemäß der zuvor bereitgestellten Vorgabendatenbank 320 in dem dritten Datensatz verwendet werden. Auf diese Weise können die Statusvorgaben bei der Planung für einen anderen Schwertransport berücksichtigt werden.

Die dritten Daten, die in der dritten Datenstruktur bereitgestellt werden können beispielsweise für eine Erfahrungsdatenbank 900 bereitgestellt werden, mit deren Hilfe eine Routenplanung oder anders gesagt das Erstellen 90 eines ersten Datensatzes erfolgen kann.

Zusätzlich kann das Bereitstellen 700 der dritten Daten in einer weiteren Datenstruktur erfolgen. Beispielsweise kann das Bereitstellen 700 der dritten Daten in einer Datenstruktur erfolgen, die eingerichtet ist, ein beispielsweise elektronisches Dokument mit einer Zeichenfolge zu belegen. Alternativ oder zusätzlich kann das Bereitstellen 700 der dritten Daten in einer Datenstruktur erfolgen, die zur Darstellung in einer computerimplementierten Navigationsassistenz eingerichtet ist, etwa für einen sogenannten "digitalen Beifahrer".

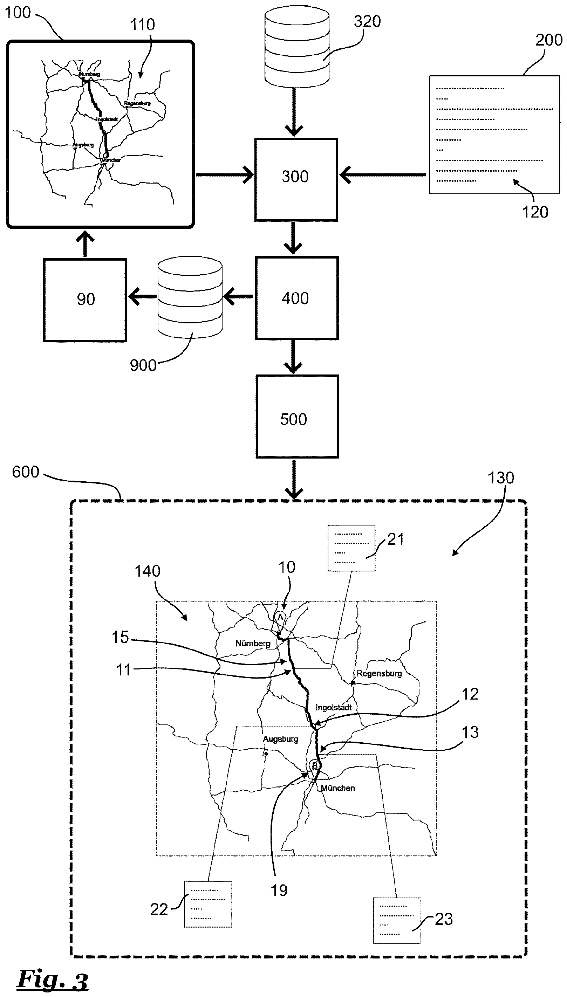

Fig. 3 zeigt ein eine weitere schematische Darstellung eines computerimplementierten Verfahrens zum Erzeugen eines Datensatzes 130 für einen Großraum- und/oder Schwertransport. Das in Fig. 3 dargestellte Verfahren kann die zuvor in Bezug auf Fig. 1 oder Fig. 2 erläuterten Verfahren teilweise oder vollständig mitumfassen. Zur Vermeidung von Wiederholungen wird auf die obigen Erläuterungen verwiesen. Das Verfahren umfasst das Bereitstellen 100 eines ersten Datensatzes 110. Mit dem ersten Datensatz 110 wird eine Route 15 bereitgestellt, entlang der der Großraum- und/oder Schwertransport verkehren soll. Die Route 15 enthält eine Vielzahl von vorbestimmten Stellen 10, 11, 12, 13, 19, die die Route 15 definieren. Das Verfahren umfasst ferner das Bereitstellen 200 eines zweiten Datensatzes 120. Mit dem zweiten Datensatz werden Statusvorgaben 21, 22, 23 bereitgestellt. Die Statusvorgaben 21, 22, 23 sind mehreren Stellen 11, 12, 13 zugeordnet. Schließlich umfasst das Verfahren das Bilden 600 eines dritten Datensatzes 130. Der dritte Datensatz 130 umfasst die die Route 15 definierenden Vielzahl von vorbestimmten Stellen 10, 11, 12, 13, 19 und Statusvorgaben 21, 22, 23, die mehreren vorbestimmten Stellen 11, 12, 13 zugeordnet sind.

Der erste Datensatz 110 enthält die vollständige Route 15. Die Route 15 wird durch die Gesamtmenge aller vorbestimmten Stellen 10, 11, 12, 13, 19 definiert. In dem zweiten Datensatz sind manche Stellen enthalten. Insbesondere enthält der zweite Datensatz 120 nicht die die Gesamtmenge aller vorbestimmten Stellen 10, 11, 12, 13, 19 der Route 15.

Der zweite Datensatz 120 umfasst mehr Statusvorgaben als der erste Datensatz 110. Der erste Datensatz 110 kann frei von Statusvorgaben ausgeführt sein, oder nur manche, aber nicht alle in dem zweiten Datensatz 120 enthaltenen Statusvorgaben enthalten.

Der dritte Datensatz 130 kann als konsolidierter Datensatz bezeichnet werden. Der dritte Datensatz 130 enthält sowohl die Gesamtmenge aller vorbestimmten Stellen 10, 11, 12, 13, 19 der Route 15 als auch sämtliche Statusvorgaben für den einen Großraum- und/oder Schwertransport.

Bei dem Verfahren wird eine Vorgabendatenbank 320 bereitgestellt, die eine Vielzahl von Statusvorgaben in einer normierten Konnotation enthält. Ferner wird bei dem Verfahren der zweite Datensatz 120 durch Analysieren 300 verarbeitet, um wenigstens eine, insbesondere mehrere, vorzugsweise alle, der in dem zweiten Datensatz 120 enthaltenen Statusvorgaben entsprechend zu einer der Vielzahl von Statusvorgaben der Vorgabedatenbank zu bestimmen.

Nach dem Analysieren 300, vor dem Analysieren 300 oder während dem Analysieren 300 kann bei dem Verfahren das Bilden 400 einer Schnittmenge der Vielzahl vorbestimmter Stellen 10, 11, 12, 13 des ersten Datensatzes 110 und der Stellen des zweiten Datensatzes 120 erfolgen. Beim Bilden 400 der Schnittmenge wird jeder Stelle aus dem zweiten Datensatz 120 wenigstens eine vorbestimmte Stelle 11, 12, 13 des ersten Datensatzes 110 zugeordnet.

Beim Bilden 400 der Schnittmenge werden vorzugsweise mehrere oder alle Stellen des zweiten Datensatzes 120 auf die Route 15 des ersten Datensatzes projiziert. Vorzugsweise kann vorgesehen sein, dass mehreren, insbesondere allen Stellen, denen gemäß dem zweiten Datensatz 120 eine jeweilige Statusvorgabe zugeordnet ist, eine vorbestimmte Stelle 11, 12, 13 des ersten Datensatzes 110 eindeutig zugeordnet wird. Es sei klar, dass der zweite Datensatz 120 dergestalt sein kann, dass mehrere verschiedene Statusvorgaben derselben Stelle zugeordnet sind, und folglich beim Bilden der Schnittmenge derselben vorbestimmten Stelle zugeordnet werden. Es ist auch denkbar, dass eine Statusvorgabe des zweiten Datensatzes 120 einem Streckenabschnitt entlang der Route 15 zuzuordnen ist, der sich aus mehreren einzelnen vorbestimmten Stellen zusammensetzt.

Es kann zweckmäßig sein, wenn im Zuge des Verfahrens zum Erzeugen des dritten Datensatzes 130 die Statusvorgaben, die im zweiten Datensatz 120 Stellen zugeordnet sind, gemäß der Abfolge der diesen Stellen zugeordneten vorbestimmten Stellen 11, 12, 13 entlang der Route 15 sortiert werden. Das Sortieren 500 kann beispielsweise mittels eines sogenannten Parsers erfolgen. Das Sortieren 500 kann beispielsweise durchgeführt werden, indem die vorbestimmten Stellen 10, 11, 12, 13, 19 aus dem ersten Datensatz sukzessive in ihrer Reihenfolge entsprechend der Route 15, also beginnend am Startpunkt 10 und am Zielpunkt 19 endend, durchgegangen werden. Die Statusvorgaben 21, 22, 23, die den vorbestimmten Stellen 11, 12, 13 zuvor zugeordnet wurden, beispielsweise beim Biden 400 der Schnittmenge, können sodann für den dritten Datensatz 130 in die Abfolge gebracht werden, die der Abfolge ihrer vorbestimmten Stellen 11, 12, 13 entspricht. In dem zweiten Datensatz 120 sind die Statusvorgaben 21, 22, 23 nicht in dieser Abfolge angeordnet.

Das Sortieren 500 erfolgt vorzugsweise nach dem Bilden 400 der Schnittmenge. Das Sortieren 500 und das Bilden 400 der Schnittmenge können während des Analysierens 300 durchgeführt werden. Es kann bevorzugt sein, wenn das Sortieren 500 nach dem Analysieren 300 durchgeführt wird.

Insgesamt ermöglichen es der hierin beanspruchte Gegenstand und seine Ausführungsformen, die Prozesse zur Einrichtung, Steuerung, Prüfung und Durchführung eines Schwertransports hinsichtlich der Effizienz, Genauigkeit und Sicherheit zu verbessern. Insbesondere werden durch den durch den hierin beanspruchten Gegenstand und seine Ausführungsformen der Arbeits-, Zeit- und Kostenaufwand für den Schwertransport gesenkt.

## Patentansprüche

1. Computerimplementiertes Verfahren zum Erzeugen eines Datensatzes für einen Großraum- und/oder Schwertransport, umfassend:
Bereitstellen einer Route als ein erster Datensatz mit einer ersten Datenstruktur, die zur kartographischen Darstellung in einer digitalen Karte eingerichtet ist, wobei der erste Datensatz eine Vielzahl von vorbestimmten Stellen enthält, die die Route definieren,
Bereitstellen mehrerer Statusvorgaben als ein zweiter Datensatz mit einer zweiten Datenstruktur, die eingerichtet ist, ein Dokument mit einer Zeichenfolge zu belegen, wobei der zweite Datensatz mehrere Stellen und diesen mehreren Stellen zugeordnete Statusvorgaben umfasst,
Bilden eines dritten Datensatzes in einer dritten Datenstruktur, wobei der dritte Datensatz die die Route definierenden Vielzahl von vorbestimmten Stellen und mehreren der Vielzahl von vorbestimmten Stellen zugeordneten Statusvorgaben umfasst.

2. Computerimplementiertes Verfahren nach Anspruch 1,
wobei der erste Datensatz, der zweite Datensatz und/oder der dritte Datensatz mit dem Schwertransport assoziierte Transportdaten umfassen.

3. Computerimplementiertes Verfahren nach Anspruch 1 oder 2, ferner umfassend:
Bereitstellen einer Vorgabendatenbank, die eine Vielzahl von Statusvorgaben umfasst, und
Analysieren des zweiten Datensatzes, um wenigstens eine der in dem zweiten Datensatz enthaltenen Statusvorgaben entsprechend zu einer der Vielzahl von Statusvorgaben der Vorgabedatenbank zu bestimmen.

4. Computerimplementiertes Verfahren nach Anspruch 3, wobei das Analysieren des zweiten Datensatzes ein Erkennen von wenigstens einem Schlagwort, das mit einer der Vielzahl von Statusvorgaben der Vorgabedatenbank verknüpft ist, umfasst.

5. Computerimplementiertes Verfahren nach Anspruch 3 oder 4, wobei das Analysieren des zweiten Datensatzes eine semantische Analyse umfasst.

6. Computerimplementiertes Verfahren nach einem der Ansprüche 3 bis 5, wobei das Analysieren des zweiten Datensatzes umfasst, dass eine Anordnung der wenigstens einen Statusvorgabe in dem zweiten Datensatzes mittels wenigstens eines Analysekriteriums identifiziert wird.

7. Computerimplementiertes Verfahren nach Anspruch 6, wobei eine Warnmeldung ausgegeben wird, wenn an einer dem wenigstens einen Analysekriterium entsprechenden Anordnung in dem zweiten Datensatzes keine Entsprechung zu einer der Vielzahl von Statusvorgaben der Vorgabedatenbank ermittelbar ist.

8. Computerimplementiertes Verfahren nach einem der vorstehenden Ansprüche, wobei eine Schnittmenge der Vielzahl vorbestimmter Stellen des ersten Datensatzes und der Stellen des zweiten Datensatzes gebildet wird, wobei jede Stelle wenigstens einer vorbestimmten Stelle zugeordnet wird.

9. Computerimplementiertes Verfahren nach Anspruch 8, wobei die den Stellen zugeordneten Statusvorgaben gemäß der Abfolge der diesen Stellen zugeordneten vorbestimmten Stellen entlang der Route sortiert werden.

10. Computerimplementiertes Verfahren nach einem der vorstehenden Ansprüche, wobei der dritte Datensatz mit einer dritten Datenstruktur bereitgestellt wird,
(i) die zur kartographischen Darstellung in einer digitalen Karte eingerichtet ist;
(ii) die eingerichtet ist, ein elektronisches Dokument mit einer Zeichenfolge zu belegen; und/oder
(iii) die zur Darstellung in einer computerimplementierten Navigationsassistenz eingerichtet ist.

11. Verfahren zum Durchführen eines Großraum- und/oder Schwertransports unter Verwendung eines dritten Datensatzes, der mit dem computerimplementierten Verfahren nach einem der vorstehenden Ansprüche erzeugt wurde.
